# EUROPÄISCHE PATENTSCHRIFT

(11) **EP 1 762 139 B1**
(45) Veröffentlichungstag und Bekanntmachung des Hinweises auf die Patenterteilung: **02.04.2008**
(21) Anmeldenummer: 06016989.3
(22) Anmeldetag: 16.08.2006
(51) Int. Cl.: A01G 27/00

(54) **Selbsttätige Einrichtung zur Bewässerung von Kulturpflanzen**
Automatic installation for watering plants
Dispositif automatique pour l'arrosage de plantes

(30) Priorität: 12.09.2005 AT 14892005
(43) Veröffentlichungstag der Anmeldung: 14.03.2007
(73) Patentinhaber: Weninger Gesellschaft m.b.H., 6410 Telfs (AT)
(72) Erfinder: Weninger, Roland, 6410 Telfs (AT)
(74) Vertreter: Torggler, Paul Norbert

(56) Entgegenhaltungen:
- CH-A5- 568 513
- DE-A1- 2 642 624
- DE-A1- 2 655 656
- DE-B1- 1 582 761

## Beschreibung

Die Erfindung betrifft eine selbsttätige Einrichtung zur Bewässerung von Kulturpflanzen mit einem in das die Pflanzen umgebende Erdreich einsteckbaren Flüssigkeitsverteiler und einem damit durch eine im Wesentlichen rohr- oder schlauchförmige Leitung verbundenen Vorratsbehälter, wobei die Wandung des Flüssigkeitsverteilers nur in seinem vom Erdreich umgebenden Teil poröse Öffnungen aufweist.

Gattungsgemäße Einrichtungen sind beispielsweise aus der DE 15 82 761 bekannt. Derartige Einrichtungen haben die Aufgabe, an ein mit Erdreich gefülltes Volumen durch längere Zeiträume bestimmte Wassermengen abzugeben, ohne dass sie Beaufsichtigung oder Bedienung erfordern indem sie unter Zuhilfenahme von Kapillarkräften ein Gleichgewicht zwischen der Wassermenge, die an das Erdreich abgegeben wird und der Wassermenge, die aus dem Vorratsbehälter in den Flüssigkeitsverteiler strömt, herstellen. Die sich im Erdreich einstellende Feuchtigkeit soll entsprechend den Erfordernissen der Pflanze frei vorgebbar sein. Die Aufrechterhaltung einer gewählten Feuchtigkeit erfordert, dass die Flüssigkeitszufuhr in das Erdreich von den Bedingungen im Erdreich selbst gesteuert wird. Ein konstanter Zufluss an Wasser ist hierfür nicht ausreichend. Die in der DE 15 82 761 beschriebene gattungsgemäße Einrichtung ist gekennzeichnet dadurch, dass der Flüssigkeitsspiegel des Vorratsbehälters unterhalb des Flüssigkeitsspiegels, in dem als geschlossener Hohlkörper ausgebildeten Flüssigkeitsverteiler liegt und dass der Flüssigkeitsverteiler nur in seinem von Erde umgebenen Teil luftdurchlässige Wandbereiche aufweist, wobei die luftdurchlässigen Wandbereiche lediglich poröse Öffnungen aufweisen. Nachteilig am Stand der Technik ist die Tatsache, dass bei Aufstellen des Wasservorratsbehälters oberhalb des Flüssigkeitsspiegels im Flüssigkeitsverteiler ständig Flüssigkeit in den Flüssigkeitsverteiler strömt und über die Poren des Flüssigkeitsverteilers an das Erdreich abgegeben wird. Die Pflanzen werden dadurch einer zu großen Feuchtigkeitsmenge ausgesetzt. Ein Ansatz zur Verhinderung dieses Effektes sieht vor, dass die Porosität des vom Erdreich umgebenen Teils des Flüssigkeitsverteilers verringert wird, was allerdings wiederum dazu führen kann, dass die an das Erdreich abgegebene Wassermenge für die Pflanzen nicht ausreichend ist.

Aufgabe der vorliegenden Erfindung ist es daher, eine Einrichtung zu schaffen, bei der die Pflanze nicht zu stark bewässert wird auch wenn der Flüssigkeitsspiegel des Vorratsbehälters oberhalb des Flüssigkeitsverteilers liegt.

Dies wird gemäß Anspruch 1 erreicht durch ein druckabhängiges Absperrorgan, das zwischen der rohr- oder schlauchförmigen Leitung und dem Flüssigkeitsverteiler eingebracht ist. Durch das Einbringen eines solchen Absperrorgans, insbesondere eines solchen Absperrorgans, das derart ausgebildet ist, dass es Wasser aus dem Vorratsbehälter in den Flüssigkeitsverteiler abgibt, sobald Flüssigkeit vom Flüssigkeitsverteiler an das außerhalb des Verteilers liegende Erdreich abgegeben wurde, lässt sich ein Gleichgewicht einstellen, bei dem immer nur so viel Wasser in den Flüssigkeitsverteiler aus dem Wasservorrat eingeleitet wird wie aus dem Flüssigkeitsverteiler an das Erdreich abgegeben wurde.

Ein mögliches Ausführungsbeispiel für eine solche Einrichtung sieht vor, dass das Absperrorgan ein Ventil ist. Insbesondere Druckventile, die bei einem bestimmten Druckunterschied öffnen, könnten hierbei Einsatz finden. Die Ventile wären als Durchgangsventile ausgebildet und man könnte beispielsweise auch einfache Sicherheitsventile einsetzen.

In einem besonders bevorzugten Ausführungsbeispiel ist vorgesehen, dass das Absperrorgan eine Membran umfasst, die zumindest eine selbstdichtende Durchgangsöffnung aufweist. Im einfachsten Fall könnte die Membran ein aufgesetzter Kunststoff oder Gummi sein, der an bestimmten Stellen sogenannte selbstdichtende Durchgangsöffnungen aufweist, wobei diese z.B. durch einfaches Perforieren der Membran erzielt werden können. Aufgrund der Materialeigenschaften des Gummi oder Kunststoffs verschließen sich solche durch Perforation eingebrachten Durchgangsöffnungen selbstständig und bilden bis zu einem gewissen Druck eine wasserdichte Wandung. Diese selbstdichtenden Durchgangsöffnungen öffnen ab einer gewissen Druckdifferenz zwischen beiden Seiten vor und nach der Durchgangsöffnung und ermöglichen den Durchtritt von Flüssigkeit (oder Gas). Bevorzugt ist daher vorgesehen, dass das Absperrorgan druckabhängig regulierbar ist. Durch die Abgabe von Wasser aus dem Flüssigkeitsverteiler an das umgebende Erdreich entsteht ein gewisser Unterdruck im Flüssigkeitsverteiler und der Druckunterschied vor und nach der Membran nimmt zu, weshalb Flüssigkeit aus dem Wasservorratsbehälter in den Flüssigkeitsverteiler einströmen kann. In einer bevorzugten Ausführung ist vorgesehen, dass die selbstdichtenden Durchgangsöffnungen derart ausgebildet sind, dass sie bis zu einem hydrostatischem Druck von zwischen 20 cm und 100 cm Wassersäule wasserundurchlässig sind. Anders ausgedrückt sind die selbstdichtenden Durchgangsöffnungen derart ausgebildet, dass sie bei einem hydrostatischem Druck von etwa 50 cm Wassersäule wasserdurchlässig sind.

Damit eine solche Einrichtung betreibbar ist, wird der Flüssigkeitsverteiler gefüllt, luftdicht verschlossen und mit der zum Vorratsbehälter führenden Leitung verbunden. Sobald durch die porösen Wandungen des Flüssigkeitsverteilers Flüssigkeit nach außen dringt, stellt sich in dessen Inneren ein Unterdruck ein, der, wenn er ein gewisses Ausmaß erreicht hat, zum Flüssigkeitstransport aus dem Flüssigkeitsbehälter führt. Idealerweise stellt sich zwischen Flüssigkeitsverteiler und dem umgebenden Erdreich durch die herrschenden kapillaren Kräfte und den entstehenden Unterdruck im Flüssigkeitsverteiler ein Gleichgewichtswert ein. Es tritt dann gleich viel Flüssigkeit in den Hohlkörper ein und aus als von der Erdoberfläche und den Kulturpflanzen verdunstet bzw. verbraucht wird.

Beim Stand der Technik erfolgt die Festlegung der im Gleichgewichtszustand ins Erdreich eintretenden Flüssigkeit in erster Linie durch den Niveauunterschied zwischen dem Flüssigkeitsspiegel im Vorratsbehälter und dem tiefsten Punkt im Flüssigkeitsverteiler (zumindest beim mit Wasser gefüllten System), den die Flüssigkeit auf ihrem Weg in den Flüssigkeitsverteiler erreicht. Ist dieser Unterschied groß, so ist zu seiner Überwindung ein beträchtlicher Unterdruck im Flüssigkeitsverteiler nötig, der wiederum nur durch Kapillarwirkung, wie sie erst bei relativ geringer Feuchte entsteht, erzeugt werden kann. Jedoch hat der Stand der Technik den Nachteil, dass bei zu hohem Niveauunterschied, also bei zu hohem Anbringen des Flüssigkeitsvorratsbehälters im Verhältnis zum Flüssigkeitsverteiler dieses Gleichgewicht gestört wird. In der Folge tritt zu viel Flüssigkeit in den Flüssigkeitsverteiler und daraufhin auch in das Erdreich. Die erfindungsgemäßen Absperrorgane, insbesondere in der Form mit den druckabhängigen selbstdichtenden Durchgangsöffnungen, vermeiden diesen Nachteil auf einfache und doch hervorragende Art und Weise. Es ist dann möglich, den Flüssigkeitsvorratsbehälter auch in höhere Positionen anzubringen. Die Handhabung wird dadurch deutlich erleichtert, denn der Benutzer ist in der Auswahl der Positionierung des Vorratsbehälters unabhängiger und kann diesen auch oberhalb des Niveaus des Flüssigkeitsverteilers anbringen.

Weiters ist vorgesehen, dass die Wandung des Flüssigkeitsverteilers in dem Bereich, der in das Erdreich einsteckbar ist, zumindest abschnittsweise aus Ton oder ähnlich porösem Material besteht. Weiters ist vorgesehen, dass der in das Erdreich eingesteckte Flüssigkeitsbehälter in jenem Bereich, der aus dem Erdreich herausragt, eine luftundurchlässige Wandung aufweist. Eine luftundurchlässige obere, d.h. aus dem Erdreich herausragende, Wandung ist bei sachgemäßer Anwendung insofern erforderlich, als dass der Druckausgleich zwischen Vorratsbehälter und Flüssigkeitsverteiler nicht durch das Eintreten von Luft sondern durch das Durchströmen von Wasser durch das Absperrorgan erzielt werden soll.

In einem weiteren Ausführungsbeispiel ist vorgesehen, dass der Flüssigkeitsverteiler zumindest bereichsweise im Wesentlichen transparent ausgebildet ist. Durch einen transparenten Bereich,z.B. im oberen, aus dem Erdreich herausragenden Bereich, lässt sich gut erkennen, ob sich eine ausreichende Wassermenge im Flüssigkeitsverteiler befindet.

Um die Einrichtung mit der Leitung zugfest zu verbinden und trotzdem kostengünstig umsetzen zu können, hat es sich als vorteilhaft erwiesen, wenn die zum Flüssigkeitsverteiler führende rohr- oder schlauchförmige Leitung in einer den Flüssigkeitsverteiler abschließenden Kappe bzw. einem Stopfen befestigt ist. In einer bevorzugten Ausführungsvariante ist vorgesehen, dass die rohr- oder schlauchförmige Leitung von der dem Flüssigkeitsverteiler zugewandten Seite der Kappe bzw. des Stopfens in die Kappe oder den Stopfen eingeführt wird. Eine solche Gestaltung ist optisch ansprechender und hat vor allem den Vorteil, dass an der Oberseite keine Bohrung in den Stopfen oder die Kappe angebracht werden muss. Idealerweise ist außerdem vorgesehen, dass das druckabhängige Absperrorgan in der Kappe bzw. dem Stopfen eingebracht ist, da in einer solchen Ausführung die Leitung nicht zum Einbringen des Absperrorgans gestückelt werden muss.

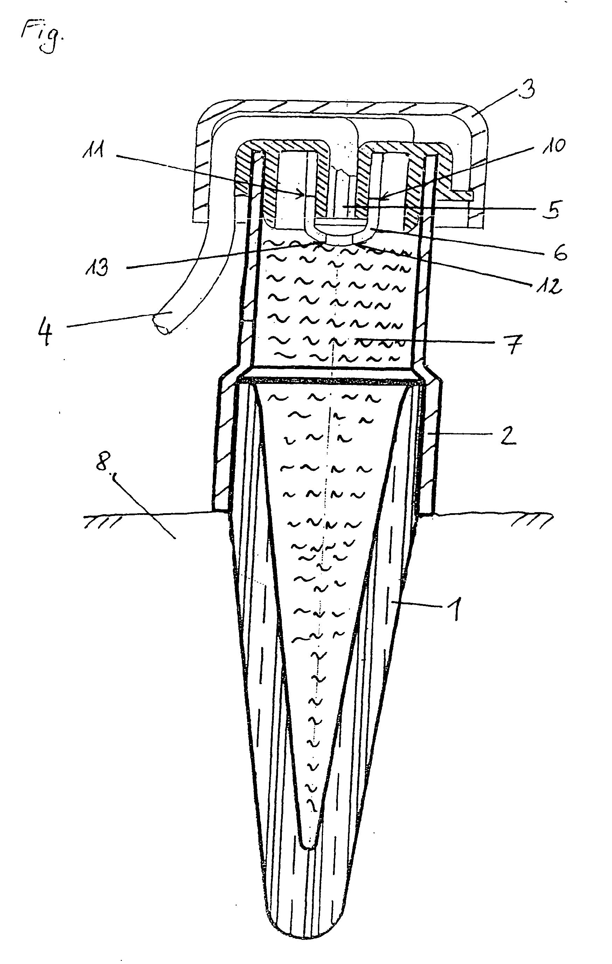

Weitere Vorteile und Details der Erfindung werden anhand der Figur sowie der Figurenbeschreibung erläutert.

Die Figur zeigt schematisch eine erfindungsgemäße Einrichtung (ohne Wasservorratsbehälter), eingebracht in das Erdreich im Querschnitt.

Im gezeigten Ausführungsbeispiel der Figur ist der poröse Teil 1 des Flüssigkeitsverteilers in der Form eines Hohlkegels aus Ton gezeigt. Die schlanke und nach unten spitz zulaufende Form erleichtert das Einbringen in das Erdreich 8, sodass die Einrichtung jederzeit leicht verpflanzt werden kann. Im aus dem Erdreich 8 herausragenden Bereich weist die Einrichtung eine Hülse 2 auf, die den aus dem Erdreich herausragenden Teil einerseits luftundurchlässig macht, andererseits ist durch die Ausgestaltung der Hülse 2 als lichtdurchlässiger Kunststoff jederzeit erkennbar, ob eine ausreichende Wassermenge 7 im Flüssigkeitsverteiler vorhanden ist. Auf die Hülse 2 ist eine Kappe 3 aufgesteckt, in die ein Schlauch 4 reicht, der zum nicht gezeigten Wasservorratsbehälter führt. Der Schlauch 4 ist in eine Wassereingangsöffnung 5 geführt, die ebenfalls aus Kunststoff besteht. Um die Wassereingangsöffnung 5 herum ist eine Trennmembran 6 eingebracht, die im Wesentlichen aus einem Gummi oder gummiähnlichen Material besteht. In die Trennmembran 6 sind mehrere Durchgangsöffnungen 10, 11, 12, 13 sowohl seitlich an der Membran als auch an der Membranunterseite mit selbstdichtenden Eigenschaften eingebracht. Diese öffnen bei einem bestimmten Druckunterschied selbstständig und lassen Wasser in das Innere 7 des Flüssigkeitsverteilers treten. Wenn der Druckunterschied aus dem Vorratsbehälter und im Inneren 7 des Flüssigkeitsverteilers auf einen bestimmten Wert (z.B. 100 cm Wassersäule) vermindert ist, verschließen sich diese Poren oder selbstdichtenden Durchgangsöffnungen 10, 11, 12, 13 selbstständig und erst nachdem Wasser durch den porösen Teil 1 des Hohlkegels an das Erdreich 8 abgegeben wurde, fließt wiederum Wasser aus dem Vorratsbehälter nach.

Selbstverständlich ist die Erfindung nicht auf das gezeigte Ausführungsbeispiel beschränkt. Es wäre durchaus denkbar, die Form und Gestaltung, insbesondere des Flüssigkeitsverteilers, andersartig zu gestalten. Beispielsweise die kreisförmige oder wabenförmige Struktur wie sie auch beim bekannten Stand der Technik (siehe DE 15 82 761) angewendet wird, wäre auch in diesem Fall denkbar. Derartige Einrichtungen lassen sich mit sehr langen Zuflussleitungen 4 gestalten, sodass der Flüssigkeitsverteiler in großer Distanz vom Vorratsbehälter angeordnet sein kann. Außerdem können mehrere Flüssigkeitsverteiler an einen Vorratsbehälter angebracht werden.

## Patentansprüche

1. Selbsttätige Einrichtung zur Bewässerung von Kulturpflanzen mit einem in das die Pflanzen umgebende Erdreich (8) einsteckbaren Flüssigkeitsverteiler und einem damit durch eine im Wesentlichen rohr- oder schlauchförmige Leitung verbundenen Vorratsbehälter, wobei die Wandung (1) des Flüssigkeitsverteilers nur in seinem vom Erdreich umgebenden Teil poröse Öffnungen aufweist, **gekennzeichnet durch** ein druckabhängiges Absperrorgan, das zwischen der rohr- oder schlauchförmigen Leitung und dem Flüssigkeitsverteiler eingebracht ist.

2. Einrichtung nach Anspruch 1, **dadurch gekennzeichnet, dass** das Absperrorgan ein Ventil ist.

3. Einrichtung nach Anspruch 1, **dadurch gekennzeichnet, dass** das Absperrorgan eine Membran (6) umfasst, die zumindest eine selbstdichtende Durchgangsöffnung (10, 11, 12, 13) aufweist.

4. Einrichtung nach Anspruch 3, **dadurch gekennzeichnet, dass** die selbstdichtenden Durchgangsöffnungen (10, 11, 12, 13) derart ausgebildet sind, dass sie bis zu einem hydrostatischem Druck zwischen 20 cm und 100 cm Wassersäule wasserundurchlässig sind.

5. Einrichtung nach Anspruch 3, **dadurch gekennzeichnet, dass** die selbstdichtenden Durchgangsöffnungen (10, 11, 12, 13) derart ausgebildet sind, dass sie bei einem hydrostatischem Druck von etwa 50 cm Wassersäule wasserdurchlässig sind.

6. Einrichtung nach einem der Ansprüche 1 bis 5, **dadurch gekennzeichnet, dass** der Flüssigkeitsverteiler zumindest bereichsweise im Wesentlichen transparent ausgebildet ist.

7. Einrichtung nach einem der Ansprüche 1 bis 6, **dadurch gekennzeichnet, dass** die zum Flüssigkeitsverteiler führende rohr- oder schlauchförmige Leitung (4) in einer den Flüssigkeitsverteiler abschließenden Kappe (3) bzw. einem Stopfen befestigt ist.

8. Einrichtung nach Anspruch 7, **dadurch gekennzeichnet, dass** die rohr- oder schlauchförmige Leitung (4) von der dem Flüssigkeitsverteiler zugewandten Seite der Kappe (3) bzw. des Stopfens in die Kappe (3) oder den Stopfen eingeführt wird.

9. Einrichtung nach Anspruch 7 oder 8, **dadurch gekennzeichnet, dass** das druckabhängige Absperrorgan in der Kappe (3) bzw, dem Stopfen eingebracht ist.

## Claims

1. An automatic device for watering cultivated plants comprising
a liquid distributor which can be inserted into the earth (8) surrounding the plants and
a supply container connected thereto by a substantially tube-form or hose-form conduit, wherein the wall (1) of the liquid distributor has porous openings only in its part surrounded by the earth,
**characterised by** a pressure-dependent shut-off member which is disposed between the tube-form or hose-form conduit and the liquid distributor

2. A device according to claim 1 wherein the shut-off member is a valve.

3. A device according to claim 1 wherein the shut-off member includes a diaphragm (6) which has at least one self-sealing through opening (10, 11, 12, 13).

4. A device according to claim 3 wherein the self-sealing through openings (10, 11, 12, 13) are so designed that they are water-impervious up to a hydrostatic pressure of between 20 cm and 100 cm water column.

5. A device according to claim 3 wherein the self-sealing through openings (10, 11, 12, 13) are so designed that they are water-impervious at a hydrostatic pressure of about 50 cm water column.

6. A device according to claim 1 wherein the liquid distributor is of a substantially transparent nature at least in region-wise manner.

7. A device according to claim 1 wherein the conduit (4) which is in tube or hose form and which leads to the liquid distributor is fixed in a plug or a cap (3) which closes off the liquid distributor.

8. A device according to claim 7 wherein the conduit (4) in tube or hose form is introduced into the cap (3) or the plug from the side of the cap (3) or the plug which is towards the liquid distributor.

9. A device according to claim 7 wherein the pressure-dependent shut-off member is fitted in the cap (3) or the plug.

## Revendications

1. Dispositif automatique pour l'arrosage de plantes cultivées, avec un distributeur de liquide, susceptible d'être enfiché dans le sol (8) entourant les plantes et un réservoir de stockage, lui étant relié au moyen d'une conduite sensiblement en forme de tube ou de tuyau souple, la paroi (1) du distributeur de liquide présentant des ouvertures poreuses uniquement dans sa partie entourée par le sol, **caractérisé par** un organe d'isolement dépendant de la pression, introduit entre la conduite en forme de tube ou de tuyau souple et le distributeur de liquide.

2. Dispositif selon la revendication 1, **caractérisé en ce que** l'organe d'isolement est une soupape.

3. Dispositif selon la revendication 1, **caractérisé en ce que** l'organe d'isolement comprend une membrane (6) présentant au moins une ouverture de passage (10, 11, 12, 13), à auto-étanchéité.

4. Dispositif selon la revendication 3, **caractérisé en ce que** les ouvertures de passage (10, 11, 12, 13) à auto-étanchéité sont réalisées de manière qu'elles soient imperméables à l'eau jusqu'à une pression hydrostatique d'une valeur comprise dans la fourchette 20 cm et 100 cm de colonne d'eau.

5. Dispositif selon la revendication 3, **caractérisé en ce que** les ouvertures de passage (10, 11, 12, 13) à auto-étanchéité sont réalisées de manière qu'elles soient imperméables à l'eau pour une pression hydrostatique d'une valeur d'environ 50 cm de colonne d'eau.

6. Dispositif selon l'une des revendications 1 à 5, **caractérisé en ce que** le distributeur de liquide est réalisé de façon sensiblement transparente, au moins par zones.

7. Dispositif selon l'une des revendications 1 à 6, **caractérisé en ce que** la conduite (4) en forme de tube ou de tuyau souple, assurant le guidage vers le distributeur de liquide, est fixée dans un capuchon (3) ou un bouchon, fermant le distributeur de liquide.

8. Dispositif selon la revendication 7, **caractérisé en ce que** la conduite (4) en forme de tube ou de tuyau souple est introduite depuis le côté, tourné vers le distributeur à liquide, du capuchon (3) ou du bouchon, à l'intérieur du capuchon (3) ou du bouchon.

9. Dispositif selon la revendication 7 ou 8, **caractérisé en ce que** l'organe d'isolement dépendant de la pression est introduit dans le capuchon (3) ou le bouchon,
